# EUROPÄISCHE PATENTSCHRIFT

(11) **EP 2 248 239 B1**
(45) Veröffentlichungstag und Bekanntmachung des Hinweises auf die Patenterteilung: **25.11.2015**
(21) Anmeldenummer: 08872842.3
(22) Anmeldetag: 30.12.2008
(51) Int. Cl.: H02H 3/14, B60L 3/00, B60L 3/04

(54) **VERFAHREN UND VORRICHTUNG ZUM ENTLADEN EINES HOCHSPANNUNGSNETZES**
METHOD AND DEVICE FOR DISCHARGING A HIGH VOLTAGE NETWORK
PROCEDE ET DISPOSITIF DESTINES A LA DECHARGE D'UN RESEAU DE TENSION ELEVEE

(30) Priorität: 25.02.2008 DE 102008010980
(43) Veröffentlichungstag der Anmeldung: 10.11.2010
(73) Patentinhaber: Robert Bosch GmbH, 70442 Stuttgart (DE)
(72) Erfinder: KUEHNER, Jochen, 71522 Backnang (DE); TRUNK, Martin, 71696 Moeglingen (DE); WINTER, Arnold, 70794 Filderstadt (DE); MIKULEC, Dragan, 70372 Stuttgart (DE)
(86) Internationale Anmeldenummer: PCT/EP2008/068337
(87) Internationale Veröffentlichungsnummer: WO 2009/106187

(56) Entgegenhaltungen:
- EP-A- 1 110 773
- US-A- 4 545 464

## Beschreibung

### Stand der Technik

Die Erfindung betrifft ein Verfahren zum Entladen eines Hochspannungs-Bordnetzes gemäß dem Oberbegriff des Patentanspruchs 1, ein Steuergerät gemäß dem Oberbegriff des Patentanspruchs 5, sowie ein Fahrzeug mit einem Hochspannungs-Bordnetz gemäß dem Oberbegriff des Patentanspruchs 6.

Bei den meisten herkömmlichen Fahrzeugen beträgt die Bordnetzspannung 14 Volt. Bei Hybridfahrzeugen oder Fahrzeugen mit Elektroantrieb kommen dagegen Spannungen zum Einsatz, die mehrere hundert Volt betragen können. Spannungen, die größer sind als 60 Volt werden dabei als "Hochspannung" bezeichnet.

Aus Gründen der Sicherheit müssen Hochspannungs-Bordnetze abschaltbar sein und entladen werden können. Bekannte Hochspannungs-Bordnetze umfassen zu diesem Zweck eine aktive Entlade-Vorrichtung. Diese Vorrichtung besteht i. d. R. aus einem zweipoligem Hauptschalter zum Abtrennen der Batterie vom übrigen Bordnetz, sowie einem schaltbaren Widerstand, über den die Ladung bei Bedarf abgebaut werden kann. Alternativ kann auch eine passive Entlade-Vorrichtung zum Einsatz kommen. Diese Vorrichtung besteht i.d.R. aus mindestens einem Widerstand, der parallel zum Energiespeicher und zum Hochspannungs-Bordnetz geschaltet ist. Ein Nachteil der bekannten Abschalt- und Entlade-Vorrichtung besteht darin, dass der Widerstand sehr groß in Bezug auf seine Leistung zu dimensionieren ist und daher relativ viel Bauraum benötigt, wenn Entladezeiten kleiner 5 Sekunden zu realisieren sind. Üblicherweise beträgt die Entladezeit, die mit solch einer bekannten Abschalt- und Entlade-Vorrichtung zu erreichen ist, mindestens 60 Sekunden und ist somit relativ lang.

Aus der EP 1 110 773 A ist ein Klimatisierungs-System für Haushalts- oder Fahrzeuganwendungen bekannt, welches einen elektromotorisch angetriebenen Kompressor sowie eine dazugehörige Leistungselektronik mit einem Zwischenkreiskondensator aufweist. Es ist eine Entladesteuerung vorgesehen, die die Zwischenkreiskapazität über den elektromotorisch angetriebenen Kompressor als elektrische Last entlädt. Aus der US 4 545 464 ist ein elektrisches Antriebssystem für einen Aufzug bekannt. Bei einem Fehlerfall werden die Spannungsquellen über Schalter abgetrennt und Transistoren leitend geschaltet, damit sich die Kondensatoren über zwei Widerstände entladen.

### Offenbarung der Erfindung

Es ist daher die Aufgabe der vorliegenden Erfindung, ein Verfahren und eine Vorrichtung zu schaffen, mittels derer ein elektrisches Hochspannungsnetz schnell und sicher entladen werden kann.

Gelöst wird diese Aufgabe gemäß der Erfindung durch die im Patentanspruch 1, 5 und 6 angegebenen Merkmale. Weitere Ausgestaltungen der Erfindung sind Gegenstand von Unteransprüchen.

Ein wesentlicher Aspekt der Erfindung besteht darin, den elektrischen Energiespeicher vom übrigen Netz zu trennen und wenigstens einen im Hochspannungsnetz angeschlossenen Hochspannungsverbraucher einzuschalten, um die im Netzwerk gespeicherte Ladung abzubauen. Im günstigsten Fall kann dadurch der eingangs genannte (schaltbare) Widerstand vollständig eingespart werden. Sofern dennoch ein schaltbarer Widerstand vorgesehen ist, kann dieser entweder etwas kleiner als bisher dimensioniert werden, so dass er weniger Bauraum benötigt oder er verbleibt wie er ist und dient als redundante Abschalt- und Entlade-Vorrichtung und erhöht dadurch die Hochspannungssicherheit. Durch die Parallelschaltung von Hochspannungsverbraucher und Widerstand kann die im Netzwerk gespeicherte Ladung wesentlich schneller abgebaut werden. Erfingdungsgemäß ist als Hochspannungsverbraucher ein DC/DC-Wandler vorgesehen.

Gemäß einer bevorzugten Ausführungsform der Erfindung werden mehrere, vorzugsweise alle Hochspannungsverbraucher gleichzeitig eingeschaltet. Dadurch kann eine noch schnellere Entladung des Netzes erreicht werden.

Sofern ein schaltbarer Widerstand als Entladeschaltung vorgesehen ist, werden der bzw. die Hochspannungsverbraucher und der Widerstand vorzugsweise gleichzeitig eingeschaltet.

Als Hochspannungsverbraucher zählen grundsätzlich alle im Hochspannungsnetz angeschlossenen Verbraucher, wie z.B. ein Klima-Kompressor, DC/DC-Wandler oder eine elektrische Lenkhilfe.

Zum Ein- und Ausschalten der Hochspannungsverbraucher und gegebenenfalls der zusätzlichen Entlade-Schaltung ist vorzugsweise ein Steuergerät vorgesehen, das mit den zugehörigen Schalteinheiten der einzelnen Bauelemente verbunden ist.

Der Abschalt- und Entlade-Vorgang wird vorzugsweise nach der Aktion Fahrzeug-Zündung Aus, einer Kollision des Fahrzeugs oder vor dem Durchführen von Wartungsarbeiten durchgeführt.

Das vorstehend beschriebene Verfahren kommt insbesondere in Hybridfahrzeugen zum Einsatz, ist aber auch in Elektrofahrzeugen und Brenstoffzellenfahrzeugen anwendbar.

### Kurze Beschreibung der Zeichnungen

Die Erfindung wird nachstehend anhand der beigefügten Zeichnungen beispielhaft näher erläutert. Es zeigen:

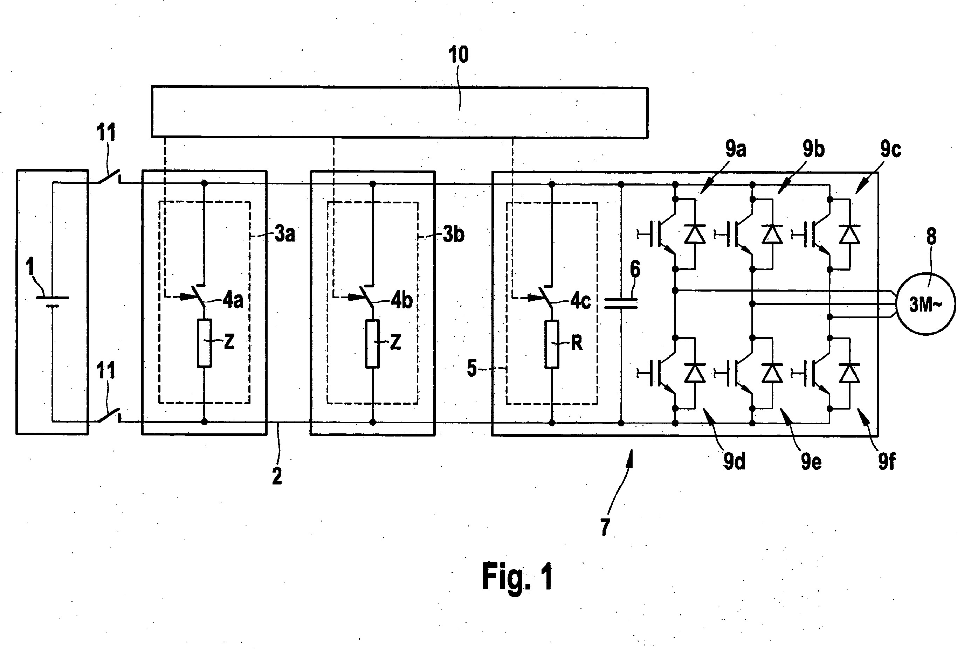

Fig. 1 eine schematische Darstellung eines Hochspannungsnetzes

### Ausführungsform der Erfindung

Fig. 1 zeigt eine stark vereinfachte Darstellung eines Hochspannungs-Bordnetzes, wie es beispielsweise in Hybridfahrzeugen eingesetzt werden kann. Die Spannung des Hochspannungsnetzes 2 kann beispielsweise 300 Volt betragen. Das Hochspannungs-Bordnetz 2 umfasst eine Hochspannungs-Batterie 1, mehrere Hochspannungsverbraucher 3a,3b, einen Umrichter 7 mit einem Zwischenkreiskondensator 6 und eine elektrische Maschine 8. Die Endstufenschalter inkl. Freilaufdiode des Umrichters 7 sind mit den Bezugszeichen 9a-9f bezeichnet. In 3a, 3b können sich weitere Zwischenkreiskondensatoren befinden, die ebenfalls zu entladen sind.

Um die im Netzwerk 2 und insbesondere im Zwischenkreiskondensator 6 gespeicherte Ladung abzubauen, ist ein schaltbarer Widerstand 5 vorgesehen, der parallel zum Zwischenkreiskondensator 6 geschaltet ist. Der schaltbare Widerstand 5 ist bei dieser Ausführungsform im Umrichter 7 baulich integriert, könnte aber auch an anderer Stelle angeschlossen sein.

In einer Situation, in der die Ladung im Hochspannungs-Bordnetz abgebaut werden soll, wird zunächst die Batterie 1 mittels der Schalter 11 vom übrigen Bordnetz getrennt. Im dargestellten Ausführungsbeispiel ist in beiden Anschlussleitungen der Batterie 1 jeweils ein Schalter 11 vorgesehen. Danach werden der Widerstand 5 und gleichzeitig ein oder mehrere Hochspannungsverbraucher 3a,3b eingeschaltet. Die im Bordnetz 2 und insbesondere im Zwischenkreiskondensator 6 gespeicherte Ladung wird durch die parallel geschalteten Impedanzen Z sehr schnell abgebaut. Auf diese Weise können Entladezeiten von weniger als 5 s, je nach Auslegung des Bordnetzes auch von weniger als 1 s erreicht werden.

Als Hochspannungsverbraucher kommen grundsätzlich sämtliche im Hochspannungsnetz 2 angeschlossenen Verbraucher in Frage. Bei dem Verbraucher 3a kann es sich beispielsweise um einen Klima-Kompressor handeln. Bei dem Verbraucher 3b kann es sich beispielsweise um einen DC/DC-Wandler handeln.

Die Schalter 4a-4c der einzelnen Verbraucher 3a,3b und des Widerstandes 5 sind mit einem Steuergerät 10 verbunden und werden zum Zeitpunkt der beginnenden Entladung von diesem eingeschaltet.

## Patentansprüche

1. Verfahren zum Entladen eines Hochspannungs-Bordnetzes (2), das mindestens einen Energiespeicher (1) und mehrere Hochspannungsverbraucher (3) umfasst, wobei der Energiespeicher (1) vom übrigen Bordnetz elektrisch getrennt und wenigstens einer der Hochspannungsverbraucher (3) eingeschaltet wird, um die im Bordnetz (2) gespeicherte Ladung abzubauen,
**dadurch gekennzeichnet, dass** die Hochspannungsverbraucher (3) einen DC/DC-Wandler umfassen.

2. Verfahren nach Anspruch 1, **dadurch gekennzeichnet, dass** mehrere der Hochspannungsverbraucher (3) gleichzeitig eingeschaltet werden.

3. Verfahren nach Anspruch 1 oder 2, **dadurch gekennzeichnet, dass** einer oder mehrere der Hochspannungsverbraucher (3) gleichzeitig mit einer zusätzlichen Entladeschaltung (5) eingeschaltet werden, um die im Netzwerk gespeicherte Ladung abzubauen.

4. Verfahren nach einem der vorhergehenden Ansprüche, **dadurch gekennzeichnet, dass** das Hochspannungs-Bordnetz (2) nach der Aktion Fahrzeug-Zündung Aus oder einer Kollision des Fahrzeugs oder vor dem Durchführen von Wartungsarbeiten entladen wird.

5. Steuergerät (10), umfassend Mittel zum Durchführen eines der vorstehend beanspruchten Verfahren.

6. Fahrzeug mit einem Hochspannungs-Bordnetz (2), das wenigstens einen Energiespeicher (1), mehrere schaltbare Hochspannungsverbraucher (3) und wenigstens ein Steuergerät (10) umfasst, wobei bei Vorliegen einer Entlade-Anforderung der Energiespeicher (1) vom übrigen Bordnetz (2) elektrisch getrennt und wenigstens einer der Hochspannungsverbraucher (3) eingeschaltet wird, um die im Bordnetz (2) gespeicherte Ladung abzubauen,
**dadurch gekennzeichnet, dass** die Hochspannungsverbraucher (3) einen DC/DC-Wandler umfassen.

7. Fahrzeug nach Anspruch 6, **dadurch gekennzeichnet, dass** die Hochspannungsverbraucher (3) einen Klima-Kompressor umfassen.

8. Fahrzeug nach Anspruch 6, **dadurch gekennzeichnet, dass** die Hochspannungsverbraucher (3) eine elektrische Lenkhilfe umfassen.

## Claims

1. Method for discharging a high-voltage vehicle electrical distribution system (2), which comprises at least one energy store (1) and a plurality of high-voltage consumers (3), wherein the energy store (1) is electrically isolated from the rest of the vehicle electrical distribution system and at least one of the high-voltage consumers (3) is switched on in order to reduce the charge stored in the vehicle electrical distribution system (2), **characterized in that** the high-voltage consumers (3) comprise a DC-to-DC converter.

2. Method according to Claim 1, **characterized in that** a plurality of the high-voltage consumers (3) is switched on at the same time.

3. Method according to Claim 1 or 2, **characterized in that** one or more of the high-voltage consumers (3) are switched on at the same time as an additional discharge circuit (5) in order to reduce the charge stored in the network.

4. Method according to one of the preceding claims, **characterized in that**, after the action of vehicle ignition Off or a collision of the vehicle or prior to performing maintenance work, the high-voltage vehicle electrical distribution system (2) is discharged.

5. Control device (10), comprising means for implementing one of the methods claimed above.

6. Vehicle comprising a high-voltage vehicle electrical distribution system (2), which comprises at least one energy store (1), a plurality of switchable high-voltage consumers (3) and at least one control device (10), wherein, in the case of the presence of a discharge request, the energy store (1) is electrically isolated from the rest of the vehicle electrical distribution system (2) and at least one of the high-voltage consumers (3) is switched on in order to reduce the charge stored in the vehicle electrical distribution system (2), **characterized in that** the high-voltage consumers (3) comprise a DC-to-DC converter.

7. Vehicle according to Claim 6, **characterized in that** the high-voltage consumers (3) comprise a climate-control compressor.

8. Vehicle according to Claim 6, **characterized in that** the high-voltage consumers (3) comprise an electric power-assisted steering system.

## Revendications

1. Procédé destiné à la décharge d'un réseau de bord haute tension (2) qui comprend au moins un accumulateur d'énergie (1) et plusieurs consommateurs haute tension (3), l'accumulateur d'énergie (1) étant séparé électriquement du reste du réseau de bord et au moins l'un des consommateurs haute tension (3) étant branché afin de diminuer la charge stockée dans le réseau de bord (2),
**caractérisé en ce que** les consommateurs haute tension (3) comprennent un convertisseur CC/CC.

2. Procédé selon la revendication 1, **caractérisé en ce que** plusieurs des consommateurs haute tension (3) sont branchés simultanément.

3. Procédé selon la revendication 1 ou 2, **caractérisé en ce qu'**un ou plusieurs des consommateurs haute tension (3) sont branchés simultanément avec un circuit de décharge supplémentaire (5) afin de diminuer la charge stockée dans le réseau.

4. Procédé selon l'une quelconque des revendications précédentes, **caractérisé en ce que** le réseau de bord haute tension (2) est déchargé après l'action d'arrêt d'allumage du véhicule ou après une collision du véhicule ou avant d'effectuer des travaux de maintenance.

5. Appareil de commande (10) comprenant des moyens pour mettre en oeuvre un procédé selon l'une quelconque des revendications précédentes.

6. Véhicule comprenant un réseau de bord haute tension (2) qui comprend au moins un accumulateur d'énergie (1), plusieurs consommateurs haute tension commutables (3) et au moins un appareil de commande (10), l'accumulateur d'énergie (1), en présence d'une demande de décharge, étant séparé électriquement du reste du réseau de bord (2) et au moins l'un des consommateurs haute tension (3) étant branché afin de diminuer la charge stockée dans le réseau de bord (2),
**caractérisé en ce que** les consommateurs haute tension (3) comprennent un convertisseur CC/CC.

7. Véhicule selon la revendication 6, **caractérisé en ce que** les consommateurs haute tension (3) comprennent un compresseur de climatisation.

8. Véhicule selon la revendication 6, **caractérisé en ce que** les consommateurs haute tension (3) comprennent une direction assistée électrique.
